# EUROPÄISCHE PATENTSCHRIFT

(11) **EP 2 731 772 B1**
(45) Veröffentlichungstag und Bekanntmachung des Hinweises auf die Patenterteilung: **28.06.2017**
(21) Anmeldenummer: 12743067.6
(22) Anmeldetag: 02.07.2012
(51) Int. Cl.: F03D 1/06, B29C 70/44, B29C 70/08, B29C 31/00, B29L 31/08, B29B 11/16

(54) **VERFAHREN ZUM HERSTELLEN EINES ROTORBLATTS FÜR EINE WINDENERGIEANLAGE**
METHOD FOR PRODUCING A ROTOR BLADE FOR A WIND TURBINE
PROCÉDÉ DE FABRICATION D'UNE PALE DE ROTOR POUR ÉOLIENNE

(30) Priorität: 11.07.2011 DE 102011078951
(43) Veröffentlichungstag der Anmeldung: 21.05.2014
(73) Patentinhaber: Senvion GmbH, 22297 Hamburg (DE)
(72) Erfinder: RICHERS, Tilman, 60314 Frankfurt am Main (DE)
(74) Vertreter: Seemann & Partner Patentanwälte mbB
(86) Internationale Anmeldenummer: PCT/EP2012/002765
(87) Internationale Veröffentlichungsnummer: WO 2013/007351

(56) Entgegenhaltungen:
- EP-A1- 1 754 589
- EP-A1- 2 338 668
- WO-A1-2010/097657
- DE-A1-102008 045 601
- DE-A1-102008 046 006
- US-A1- 2011 142 667
- US-A1- 2011 142 675

## Beschreibung

Die Erfindung betrifft ein Verfahren zum Herstellen eines Rotorblatts für eine Windenergieanlage, wobei das Rotorblatt wenigstens teilweise, insbesondere wenigstens im Bereich einer Rotorblattwurzel, in einer als Negativ-Form ausgebildeten Hauptform hergestellt wird.

Rotorblätter für Windenergieanlagen werden üblicherweise in einer Schalenbauweise gefertigt, wobei in verschiedenen Formen bzw. Teilformen Schalenteile hergestellt werden, die nach dem Aushärten in ihren Teilformen zusammengesetzt und miteinander verbunden werden. Schalen von Rotorblättern werden üblicherweise aus faserverstärkten Kunststoffen, beispielsweise glasfaserverstärkten Polyesterharzen oder Epoxidharzen, hergestellt, die in entsprechenden Teilformen eingelegt und anschließend ausgehärtet werden. Bei dem so genannten Harzinfusionsverfahren werden Fasergelege von trockenen Glasfasern oder Kohlefasern in die Form eingelegt und das zähflüssige Harz unter Unterdruck eingesogen, so dass es die Zwischenräume zwischen den Fasern der Fasergelege ausfüllt. Anschließend härtet das Harz aus, so dass die Schale des Rotorblatts entsteht.

Insbesondere im Bereich der Rotorblattwurzel ist die Rotorblattschale dick ausgeführt, damit die auf das Rotorblatt wirkenden Kräfte in die Rotornabe eingeleitet werden können. Hierzu wird häufig die Schale aus Fasergelege mit einem leichten, jedoch festen, Kernmaterial verstärkt. Kernmaterial in einer solchen Sandwich-Bauweise kann beispielsweise Balsaholz, Schaumstoff aus Polymermaterial oder Ähnliches sein. Eine solche Sandwich-Struktur führt zu einer leichteren und gleichzeitig stabileren Bauform.

Die mit Bolzen an einer Rotornabe befestigte Rotorblattwurzel ist im Querschnitt rund. Bei einer Herstellung mit zwei Teilformen, die jeweils halbrund sind, ergibt sich eine ungünstige Ausgangslage, da es schwierig ist, an den steil aufragenden Seitenwänden die Fasergelege ausreichend genau zu positionieren und zu fixieren. Dies und die Notwendigkeit, im Bereich der Rotorblattwurzel eine hohe Anzahl von Fasergelegen bzw. Lagen von Fasergelegen zu verwenden, führen zu einer hohen und somit wirtschaftlich nachteiligen Einlegezeit.

Ferner ist aus EP 2 338 668 A1 ein Verfahren zur Herstellung von Kompositschalenstrukturen für Rotorblätter von Windenergieanlagen bekannt, bei dem zwischen einer Positivform und einer Preform-Form zunächst ein Preform einer Rotorblatthalbschale aus mehreren Faserlagen hergestellt wird, der Preform von der Preform-Form abgelöst wird und zum Schluss ein Form-Hohlraum zwischen der Positivform und einer Negativform um das Preform gebildet wird und darin ein Harz im Preform ausgehärtet wird, das entweder bei der Formung des Preforms oder im Form-Hohlraum zwischen Positivform und Negativform zugesetzt wurde. Damit wird der langwierige Verfahrensschritt des Auflegens von Faserlagen vom relativ schnellen Verfahrensschritt des Aushärtens des Harzes entkoppelt, so dass parallel mehrere Schalenstrukturen hergestellt und nacheinander in der zweiten Form ausgehärtet werden können.

DE 10 2008 045 601 A1 offenbart ein Verfahren zur Fertigung eines Rotorblatts für eine Windenergieanlage, bei dem die Fertigungszeit dadurch verkürzt wird, dass das Rotorblatt für seine Fertigung in wenigstens zwei Segmente eingeteilt ist, wobei wenigstens eine Unterteilung etwa quer zu seiner Längserstreckung zwischen dem Blattwurzelbereich und der Blattspitze vorgesehen ist.

EP 1 754 589 A1 betrifft ein Verfahren zur Herstellung eines kontinuierlichen Laminats, das als Gurt oder anderer Teil eines Rotorblatts einer Windenergieanlage verwendbar ist. Dazu wird eine Mehrzahl von parallelen Fasern in einem aushärtbaren Matrixmaterial eingebettet, das Matrixmaterial ausgehärtet und Kanäle in die Oberseite und/oder Unterseite des Laminats geformt, die im Vergleich zur Ausrichtung der Fasern unter einem Winkel angeordnet sind.

In US 2011/0142675 A1 ist eine Rotorblattverbindung einer Windenergieanlage offenbart, wobei das Rotorblatt aus einer Mehrzahl von Blattsegmenten in Längsrichtung des Rotorblatts hergestellt ist. Die Blattsegmente weisen zueinander formkompatible Endstücke auf, entlang derer sie miteinander verschraubt werden.

WO 2010/097657 A1 betrifft ein Verfahren zur Herstellung von Rotorblättern von Windenergieanlagen, wobei eine Stützungsplatte auf einem Formteil positioniert wird, das einer Form wenigstens eines Teils des Rotorblatts entspricht. Eine Mehrzahl von Lagen eines Materials wird über die Stützplatte gelegt, die Mehrzahl der Lagen wird mit der Stützplatte vernäht und mit der Stützplatte in eine Form eingelegt, die der Form des Formteils entspricht.

Außerdem offenbart US2011/0142667 A1 eine Rotorblattanordnung für eine Windkraftanlage, die ein Fußsegment mit einer Fußschale und einer internen Fußkomponente und an dem Fußsegment befestigtes Spitzensegment aufweist. Ferner weist das Spitzensegment eine Spitzenschale und eine interne Spitzenkomponente auf. Des Weiteren ist ein Zugangsfenster der Rotorblattanordnung dafür eingerichtet, einen Zugang zu dem Innenbereich eines Abschnittes der Rotorblattanordnung bereitzustellen.

Demgegenüber liegt die Aufgabe der vorliegenden Erfindung darin, die Herstellungsdauer für ein Rotorblatt bei gleichzeitig, insbesondere im Blattwurzelbereich, erhöhter Qualität zu verringern und die Handhabung bei der Herstellung zu verbessern.

Diese Aufgabe wird durch ein Verfahren zum Herstellen eines Rotorblatts für eine Windenergieanlage, wobei das Rotorblatt wenigstens teilweise, insbesondere wenigstens im Bereich einer Rotorblattwurzel, in einer als Negativ-Form ausgebildeten Hauptform hergestellt wird, gelöst, das dadurch weitergebildet ist, dass zunächst wenigstens ein Sandwich-Preform mit einer Sandwichstruktur aus Fasergelegen und flächig zwischen den Fasergelegen eingelegtem Kernmaterial hergestellt wird und dass wenigstens eine Sandwich-Preform anschließend in die Hauptform eingelegt und mittels eines Harzinfusionsverfahrens mit weiteren in die Hauptform eingelegten Sandwich-Preforms und/oder Fasergelegen und/oder wenigstens einem Rotorblattgurt zum Rotorblatt verbunden werden, wobei die Schale des Rotorblatts in dem Bereich, in dem das wenigstens eine Sandwich-Preform eingesetzt wird, in Profiltiefenrichtung segmentiert ist und die Schalensegmente aus Sandwich-Preforms hergestellt werden, wobei an einer Druckseite und einer Saugseite des Rotorblatts jeweils mehrere Sandwich-Preforms zu der Rotorblattschale zusammengesetzt werden, wobei nach dem Einlegen von Sandwich-Preforms in die Hauptform wenigstens eine Lage von Fasergelegen über zwei nebeneinander angeordnete Sandwich-Preforms gelegt wird.

Die Erfindung beruht auf dem Grundgedanken, dass die Sandwich-Strukturen in den Rotorblattschalen, insbesondere im Bereich der Rotorblattwurzel, als Preforms hergestellt werden, die nach ihrer Herstellung in die Hauptform für das Rotorblatt eingesetzt werden. Preform ist ein durch Bindemittel (Schmelzen, Nähen, etc.) stabilisierter, endkonturnaher Faservorformling. Die Herstellung von Sandwich-Preforms hat den Vorteil, dass die Preforms parallel zueinander herstellbar sind und als Ganzes in die Hauptform einsetzbar sind. Damit ist die Formgebung und Handhabung wesentlich vereinfacht gegenüber dem bisher verwendeten Verfahren, bei dem die Fasergelege sowie die Kernmaterialien in die steilen Teile der Hauptform eingelegt werden mussten. Durch die Herstellung von Sandwich-Preforms kann vermieden werden, dass die Preforms an steilen Wänden gebildet werden müssen. Vielmehr kann die Sandwich-Preform im Wesentlichen flach liegend hergestellt werden, was das Fixieren und Handhaben wesentlich erleichtert. Erst nach der Herstellung der Sandwich-Preform wird diese als Ganzes im Verbund in die gegebenenfalls steilen Partien der Hauptform eingesetzt.

Durch die somit mögliche parallelisierte Fertigung werden die Einlegezeiten von Verstärkungslagen und Kernmaterial beim Rotorblattbau reduziert. Die Ablagequalität erhöht sich durch fixierte Lagen in den Sandwich-Preforms. Außerdem ergibt sich eine bessere Handhabung der Lagen der Fasergelege.

Im Rahmen der vorliegenden Erfindung wird unter dem Blattwurzelbereich der Bereich des Rotorblatts verstanden, der nicht oder nur geringfügig aerodynamisch wirksam ist. Dieser kann sich bis zu 20% der Länge des Rotorblatts erstrecken und somit den Übergangsbereich zwischen Blattwurzel und dem aerodynamisch wirksamen Bereich umfassen und hängt vom Typ des Rotorblatts ab. Gleichzeitig ist der Blattwurzelbereich derjenige Bereich, an dem am meisten Sandwich-Material liegt. Üblicherweise wird das Sandwich-Material auch bevorzugt in den Bereichen, in denen die Hauptformen besonders steil sind, angewandt. Dies ist insbesondere im Blattwurzelbereich der Fall.

Erfindungsgemäß ist die Schale des Rotorblatts in dem Bereich, in dem das wenigstens eine Sandwich-Preform eingesetzt wird, in Profiltiefenrichtung segmentiert und werden die Schalensegmente aus Sandwich-Preforms hergestellt, wobei insbesondere an einer Druckseite und einer Saugseite des Rotorblatts jeweils mehrere Sand wich-Preforms zu der Rotorblattschale zusammengesetzt werden. Die Profiltiefenrichtung bedeutet die Richtung von der Profilvorderkante zur Profilhinterkante. Die einzelnen Sandwich-Preform-Segmente haben daher eine Erstreckung in Längsrichtung des Rotorblatts. Durch die Herstellung mehrerer Segmente der Sandwich-Preforms ist die Herstellung jedes einzelnen Preforms einfach und zeiteffektiv möglich. Die Krümmung jedes einzelnen Sandwich-Sandwich-Preforms hergestellt, wobei insbesondere an einer Druckseite und einer Saugseite des Rotorblatts jeweils mehrere Sand wich-Preforms zu der Rotorblattschale zusammengesetzt werden. Die Profiltiefenrichtung bedeutet die Richtung von der Profilvorderkante zur Profilhinterkante. Die einzelnen Sandwich-Preform-Segmente haben daher eine Erstreckung in Längsrichtung des Rotorblatts. Durch die Herstellung mehrerer Segmente der Sandwich-Preforms ist die Herstellung jedes einzelnen Preforms einfach und zeiteffektiv möglich. Die Krümmung jedes einzelnen Sandwich-Preform-Segments ist kleiner als die gesamte Krümmung einer Halbschale des Rotorblatts, so dass die Positionierung und Fixierung der Lagen der Glasfasergelege in den Segmenten der Sandwich-Preforms ebenfalls erleichtert wird.

Vorzugsweise wird das Sandwich-Preform durch Auflegen der Fasergelege und des Kernmaterials auf eine Positiv-Form erzeugt, wobei das Sandwich-Preform insbesondere durch Schmelzbinden, Kleben oder Nähen gefügt wird. Das Fügen führt dazu, dass das Sandwich-Preform eine einheitliche Baueinheit wird, die als Ganzes zur Herstellung des Rotorblatts weiter verwendet und weiter verarbeitet wird. Die Positiv-Form hat den weiteren Vorteil, dass eine Vielzahl von Sandwich-Preforms für eine Vielzahl von gleichartigen Rotorblättern in gleichartiger Weise erzeugbar ist.

In einer vorteilhaften Weiterbildung wird das Sandwich-Preform auf der Positiv-Form in der Hauptform positioniert. Die Positiv-Form wird somit zum Herstellen, zum Tragen und zum Positionieren des Sandwich-Preforms verwendet und erlaubt eine passgenaue Herstellung und Positionierung der Sandwich-Preforms in der Hauptform.

Weiter vorzugsweise wird nach dem Einlegen von Sandwich-Preforms in die Hauptform ein Rotorblattgurt in oder auf ein Sandwich-Preform oder zwischen zwei Sandwich-Preforms eingebettet. Auf diese Weise wird die Stoßkante zwischen zwei angrenzenden Sandwich-Preforms überbrückt, was eine weitere Verbesserung der Stärke der Schalenstruktur bewirkt.

Ferner ist ein Sandwich-Preform für ein Rotorblatt für eine Windenergieanlage mit einer als Teil einer Rotorblattschale geformten Sandwich-Struktur aus mehreren zusammengefügten Lagen eines oder mehrerer Fasergelege mit einem zwischen den Lagen des oder der Fasergelege flächig eingelegten Kernmaterial vorgesehen, wobei das Sandwich-Preform als Schalensegment einer in Profiltiefenrichtung segmentierten druckseitigen oder saugseitigen Rotorblattschale ausgebildet ist. Ein solches Sandwich-Preform wird wie oben beschrieben hergestellt und bietet den Vorteil, als Ganzes in eine Hauptform für ein Rotorblatt einer Windenergieanlage einlegbar zu sein. Die Herstellung der Sandwich-Preforms ist einfacher als die entsprechende Herstellung der Sandwich-Struktur in der Hauptform selbst, und die Handhabung eines solchen Sandwich-Preforms ist einfacher als die Handhabung der Fasergelege in der mit steilen Seitenwänden versehenen Hauptform.

Außerdem wird ein Rotorblatt für eine Windenergieanlage, die unter Einsatz von Sandwich-Preforms in dem oben beschriebenen erfindungsgemäßen Verfahren hergestellt ist, ausgebildet. Dabei verläuft vorzugsweise eine Trennebene zwischen zwei Sandwich-Preforms entlang vorgefertigter Rotorblattkomponenten oder überbrückt ein Sandwich-Preform eine Trennebene zwischen zwei vorgefertigten Rotorblattkomponen-Herstellung der Sandwich-Struktur in der Hauptform selbst, und die Handhabung eines solchen Sandwich-Preforms ist einfacher als die Handhabung der Fasergelege in der mit steilen Seitenwänden versehenen Hauptform.

Die der Erfindung zugrunde liegende Aufgabe wird auch durch ein Rotorblatt für eine Windenergieanlage, die unter Einsatz von Sandwich-Preforms in dem oben beschriebenen erfindungsgemäßen Verfahren hergestellt ist, gelöst. Dabei verläuft vorzugsweise eine Trennebene zwischen zwei Sandwich-Preforms entlang vorgefertigter Rotorblattkomponenten oder überbrückt ein Sandwich-Preform eine Trennebene zwischen zwei vorgefertigten Rotorblattkomponenten. Es ist also nicht unbedingt notwendig, dass die Trennebene zwischen zwei Sandwich-Preforms beispielsweise entlang der Trennebene zwischen der oberen Halbschale und der unteren Halbschale des Rotorblatts verläuft, es kann jedoch so sein.

Außerdem wird eine Windenergieanlage mit einem oben beschriebenen Rotorblatt bereitgestellt.

Die zu den genannten Gegenständen, d.h. dem Herstellungsverfahren, dem Sandwich-Preform, dem Rotorblatt und der Windenergieanlage genannten Merkmale, Vorteile und Eigenschaften gelten ohne Einschränkung auch für die jeweils anderen Gegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage,
- Fig. 2: eine schematische Darstellung einer Draufsicht auf ein Rotorblatt,
- Fig.3: eine schematische Querschnittsdarstellung durch ein Rotorblatt,
- Fig. 4: eine schematische Querschnittsdarstellung durch eine Hauptform zur Herstellung eines Rotorblatts,
- Fig. 5: eine schematische Querschnittsdarstellung durch ein erfindungsgemäßes Sandwich-Preform und
- Fig. 6: eine schematische Darstellung der Herstellung eines erfindungsgemäßen Rotorblatts mit Sandwich-Preforms.

In den Zeichnungen sind jeweils gleiche oder gleichartige Elemente und/oder Teile mit denselben Bezugsziffern versehen, so dass von einer erneuten Vorstellung jeweils abgesehen wird.

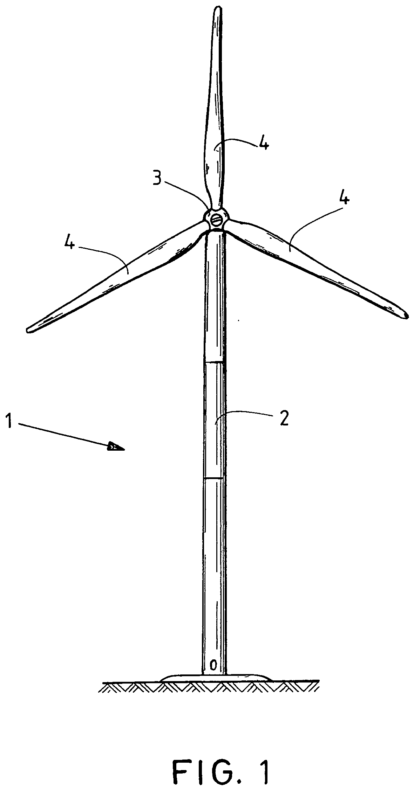

In Fig. 1 ist eine Windenergieanlage 1 schematisch dargestellt. Die Windenergieanlage 1 verfügt über einen Turm 2, an dessen Spitze an einem nicht dargestellten Maschinengehäuse eine Rotornabe 3 mit drei Rotorblättern 4 angeordnet ist. Der aus Rotornabe 3 und Rotorblättern 4 bestehende Rotor der Windenergieanlage 1 ist über eine im Wesentlichen horizontal ausgerichtete Drehachse drehbar.

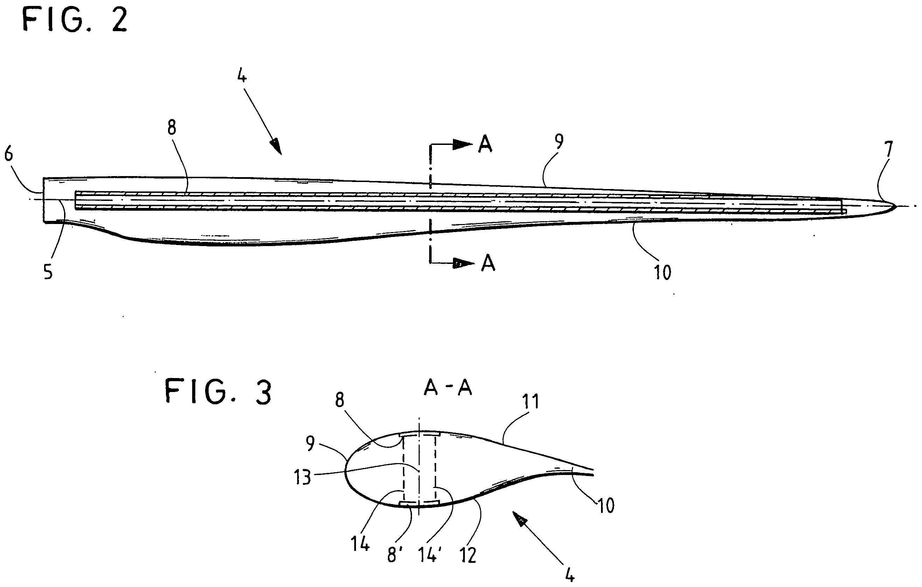

In Fig. 2 ist ein Rotorblatt 4 von oben schematisch dargestellt. Das Rotorblatt erstreckt sich in Längsrichtung der Längsachse 5 von einer Rotorblattwurzel 6 zu einer Rotorblattspitze 7. Ebenfalls in Längsrichtung auf der Längsachse 5 befindet sich ein Blattgurt 8, der während des Betriebs der Windenergieanlage 1 auf das Rotorblatt 4 wirkende Biegekräfte aufnimmt und über die Rotorblattwurzel 6 in die Rotornabe 3 einleitet.

Quer zur Längsachse 6 erstreckt sich das Rotorblatt 4 von einer Profilvorderkante 9 zu einer Profilhinterkante 10.

Der Bereich der Rotorblattwurzel 6 ist in Fig. 2 in etwa derjenige Bereich einschließlich des Übergangsbereiches, der von der Rotorblattwurzel 6 bis zu etwa dem Punkt reicht, an dem die Linie ansetzt, die zu dem Bezugszeichen für den Blattgurt 8 führt. In diesem Bereich ist das Rotorblatt 4 aerodynamisch nicht oder nur kaum wirksam.

In der Mitte des Rotorblatts 4 ist eine Schnittlinie A-A gezeigt. Das Querschnittsprofil des Rotorblatts 4 an dieser Schnittlinie A-A ist in Fig. 3 gezeigt. Darin ist erkennbar, dass das Rotorblatt eine obere Halbschale an der Druckseite 11 aufweist, die sich von der Profilvorderkante bis zur Profilhinterkante 10 erstreckt, sowie eine untere Halbschale an der Saugseite 12, die sich ebenfalls von der Profilvorderkante 9 bis zur Profilhinterkante 10 erstreckt. An der Position der Längsschnittebene 13 befinden sich in der oberen Halbschale und in der unteren Halbschale jeweils Blattgurte 8, 8', die aus Fasergelegen mit unidirektionaler Faserausrichtung in Längsrichtung des Rotorblatts 4 bestehen und hauptsächlich dafür verantwortlich sind, Biegebelastungen des Rotorblatts 4 zur Rotorblattwurzel 6 hin abzuleiten und damit den Rotor in Drehung zu versetzen. Beidseits der Blattgurte 8, 8' sind die Blattschalen von Druckseite 11 und Saugseite 12 über Stege 14, 14' miteinander verbunden, die das Querschnittsprofil weiter stabilisieren.

Das Querschnittsprofil des Rotorblatts 4 an der Rotorblattwurzel 6 ist üblicherweise rund. Das runde Profil umfasst besonders ausgeprägte steile Seitenwände, an denen der Einsatz der Sandwich-Strukturen angezeigt ist. An dieser Stelle werden insbesondere im Bereich der Profilvorderkante 9 und der Profilhinterkante 10 häufig Sandwich-Strukturen eingesetzt, um die Stabilität des Rotorblatts 4 an dieser Stelle bei gleichzeitig geringem Aufwand zu verbessern.

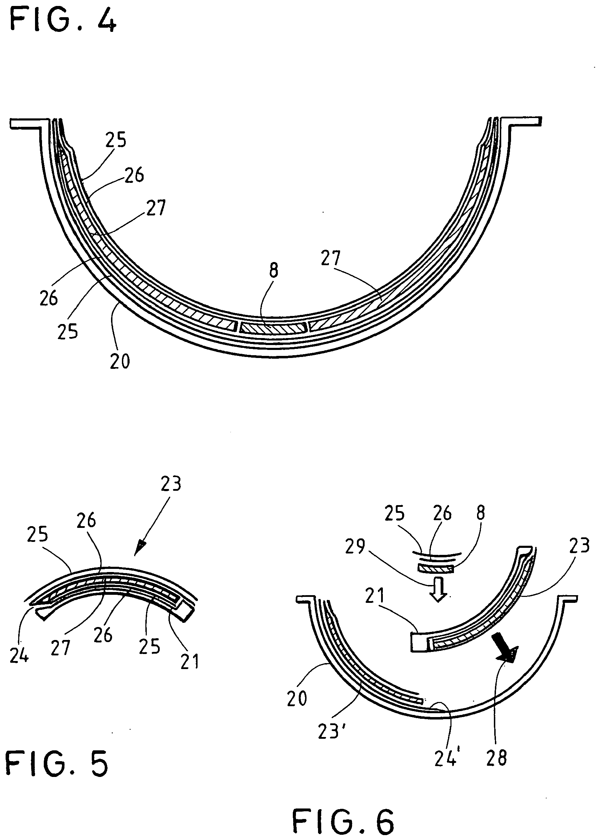

Fig. 4 zeigt einen schematischen Querschnitt durch eine Hauptform 20 zur Herstellung eines Rotorblatts 4 für eine Windenergieanlage 1. In die halbkreisförmige Negativ-Form der Hauptform 20 sind nacheinander mehrere Schichten von Materialien in einer Schichtkonstruktion aufeinander gelegt. Die erste Schicht in der Hauptform 20 ist eine 2AX-Schalenlage 25, also ein Fasergelege, dessen Fasern gegenüber der Längsausrichtung des Rotorblatts in verschiedene Richtungen, beispielsweise ± 45° oder ± 30°, verdreht sind. Es folgt eine UD-Schalenlage 26 mit unidirektionalen Fasern, die üblicherweise in Längsrichtung oder quer zur Längsrichtung des Rotorblatts 4 ausgerichtet ist. Es schließt sich eine Lage aus Kernmaterial 27, beispielsweise Balsaholz oder Schaumstoff, an, in die zwischen zwei Körpern aus Kernmaterial 27 ein Rotorblattgurt 8 eingebettet ist. Auf der Lage aus Kernmaterial 27 und dem Rotorblattgurt 8 schließen sich wiederum eine UD-Schalenlage 26 und eine 2AX-Schalenlage 25 an.

Aufgrund der Steilheit der Seitenwände der Hauptform 20 ist die Ausrichtung und Fixierung der Schalenlagen 25 und 26 in der Hauptform 20 aufwändig, arbeitsintensiv und langwierig.

In Fig. 5 ist im Querschnitt ein erfindungsgemäßes Sandwich-Preform 23 auf einer Positiv-Form 21 gezeigt. Die Positiv-Form 21 weist eine konvexe Form auf, auf die die Lagen 25, 26 und das Kernmaterial 27 in gleicher Weise und Reihenfolge, wie in Fig. 4 dargestellt, aufgelegt sind. An beiden Rändern weist die PositivForm 21 für das Sandwich-Preform 23 Strukturen auf, die eine Aussparung in der Sandwich-Preform 23 bewirken. An der links dargestellten Seite führt dies zu einer Verdünnung der Struktur, während an der rechts dargestellten Kante eine Stufenfunktion entsteht, wobei die inneren Lagen 25, 26 sowie das Kernmaterial 27 an einer Position enden und die äußeren Fasergelege Lagen 25, 26 weitergeführt werden.

Das Sandwich-Preform 23 wird auf der Positiv-Form 21 liegend hergestellt, so dass das Positionieren und Fixieren der Lagen 25, 26, 27 sehr einfach und unaufwändig erfolgt. Es besteht keine Gefahr, dass eine einzelne Lage 25, 26 oder 27 verrutscht, wie das bei den fast senkrechten Seitenwänden in der Hauptform 20 gemäß Fig. 4 der Fall ist.

Das Fügen der Lagen 25, 26 sowie des Kernmaterials 27 im Sandwich-Preform 23 auf der Positiv-Form erfolgt beispielsweise mittels Kleben, Nähen oder Schmelzbinden. Das so entstandene Sandwich-Preform 23 kann als Einheit weiter verbaut werden.

Die Herstellung des Rotorblatts 4 unter Verwendung von Sandwich-Preforms 23, 23' ist in Fig. 6 gezeigt. Anstelle der einzelnen Lagen 25, 26 und 27 werden hier die vorgefertigten Sandwich-Preforms 23, 23' in die Hauptform 20 eingesetzt. Ein Sandwich-Preform 23' ist bereits auf der linken Seite eingesetzt worden und die entsprechende Positiv-Form entfernt worden. Auf der rechten Seite in Fig. 6 wird ein auf der Positiv-Form 21 getragenes Sandwich-Preform 23 in Positionierungsrichtung 28 in die Hauptform 20 eingesetzt. Dabei stößt die äußerste Lage 25 des Sandwich-Preforms 23 an die äußerste Lage des Sandwich-Preforms 23'.

An der Stoßkante der beiden Sandwich-Preforms 23, 23' verfügen beide Sandwich-Preforms 23, 23' über Aussparungen 24', in die nachfolgend ein Blattgurt 8 in Auflagerichtung 29 auf- bzw. eingesetzt wird. Die Lücke zwischen den oberen Faserlagen 25, 26 der beiden Sandwich-Preforms 23, 23' wird nachfolgend durch eine 2AX-Faserlage 26 und durch eine UD-Faserlage 25 geschlossen, so dass der Blattgurt 8, wie in Fig. 4, von Faserlagen 25, 26 und den Kernmaterialien der Sandwich-Preforms 23, 23' eingeschlossen ist.

Alternativ kann ein Blattgurt 8 auch auf die Sandwich-Preforms 23, 23' aufgesetzt werden oder auf ein Sandwich-Preform 23, 23' aufgesetzt werden.

Die Positiv-Form 21 kann nach dem Einsetzen und Positionieren des Sandwich-Preforms 23 abgelöst werden. Alternativ kann die Positiv-Form 21 auch während des Harzinfusionsverfahrens, das auf das Positionieren folgt, verbleiben und zusammen mit der Hauptform 20 einen geschlossenen Raum für das Harzinfusionsverfahren bilden.

Durch die Verwendung der Positiv-Form 21 für das Sandwich-Preform 23, 23' reduziert sich außerdem die Anzahl der erforderlichen Vorrichtungen, da separate Positioniervorrichtungen entfallen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Windenergieanlage
- 2: Turm
- 3: Rotornabe
- 4: Rotorblatt
- 5: Längsachse
- 6: Rotorblattwurzel
- 7: Rotorblattspitze
- 8, 8': Blattgurt
- 9: Profilvorderkante
- 10: Profilhinterkante
- 11: Druckseite
- 12: Saugseite
- 13: Längsschnittebene
- 14, 14': Steg
- 20: Hauptform
- 21: Preform-Form
- 23, 23': Sandwich-Preform
- 24, 24': Aussparung
- 25: 2AX-Schalenlage
- 26: UD-Schalenlage
- 27: Sandwichkern
- 28: Positionierungsrichtung
- 29: Auflagerichtung

## Patentansprüche

1. Verfahren zum Herstellen eines Rotorblatts (4) für eine Windenergieanlage (1), wobei das Rotorblatt (4) wenigstens teilweise, insbesondere wenigstens im Bereich einer Rotorblattwurzel (6), in einer als Negativ-Form ausgebildeten Hauptform (20) hergestellt wird, **dadurch gekennzeichnet, dass** zunächst wenigstens ein Sandwich-Preform (23, 23') mit einer Sandwichstruktur aus Fasergelegen (25, 26) und flächig zwischen den Fasergelegen (25, 26) eingelegtem Kernmaterial (27) hergestellt wird und dass wenigstens eine Sandwich-Preform (23, 23') anschließend in die Hauptform (20) eingelegt und mittels eines Harzinfusionsverfahrens mit weiteren in die Hauptform (20) eingelegten Sandwich-Preforms (23, 23') und/oder Fasergelegen (25, 26) und/oder wenigstens einem Rotorblattgurt (8, 8') zum Rotorblatt (4) verbunden werden, wobei die Schale des Rotorblatts (4) in dem Bereich, in dem das wenigstens eine Sandwich-Preform (23, 23') eingesetzt wird, in Profiltiefenrichtung segmentiert ist und die Schalensegmente aus Sandwich-Preforms (23, 23') hergestellt werden, wobei an einer Druckseite (11) und einer Saugseite (12) des Rotorblatts (4) jeweils mehrere Sandwich-Preforms (23, 23') zu der Rotorblattschale zusammengesetzt werden, wobei nach dem Einlegen von Sandwich-Preforms (23, 23') in die Hauptform (20) wenigstens eine Lage von Fasergelegen (25, 26) über zwei nebeneinander angeordnete Sandwich-Preforms (23, 23') gelegt wird.

2. Verfahren nach Anspruch 1, **dadurch gekennzeichnet, dass** das Sandwich-Preform (23, 23') durch Auflegen der Fasergelege (25, 26) und des Kernmaterials (27) auf eine PositivForm (21) erzeugt wird, wobei das Sandwich-Preform (23, 23') insbesondere durch Schmelzbinden, Kleben oder Nähen gefügt wird.

3. Verfahren nach Anspruch 2, **dadurch gekennzeichnet, dass** das Sandwich-Preform (23, 23') auf der Positiv-Form (21) in der Hauptform (20) positioniert wird.

4. Verfahren nach einem der Ansprüche 1 bis 3, **dadurch gekennzeichnet, dass** das Sandwich-Preform (23, 23') an wenigstens einer Kante mit einer Aussparung (24, 24'), insbesondere zur Aufnahme wenigstens eines Teils eines Rotorblattgurtes (8, 8'), hergestellt wird.

5. Verfahren nach einem der Ansprüche 1 bis 4, **dadurch gekennzeichnet, dass** nach dem Einlegen von Sandwich-Preforms (23, 23') in die Hauptform (20) ein Rotorblattgurt (8, 8') in oder auf ein Sandwich-Preform (23, 23') oder zwischen zwei Sandwich-Preforms (23, 23') eingebettet wird.

## Claims

1. A method for producing a rotor blade (4) for a wind turbine (1), wherein the rotor blade (4) is produced at least partially, in particular at least in the region of a rotor blade root (6), in a main mold (20) designed as negative mold, **characterized in that** first at least one sandwich preform (23, 23') is produced with a sandwich structure consisting of fiber fabrics (25, 26) and core material (27) placed flat between the fiber fabrics (25, 26), and at least one sandwich preform (23, 23') is then placed in the main mold (20) and bonded to form the rotor blade (4) by means of a resin infusion method with other sandwich preforms (23, 23') placed in the main mold (20), and/or fiber fabrics (25, 26), and/or at least one rotor blade girder (8, 8'), wherein the shell of the rotor blade (4) is segmented in the direction of the depth of the profile in the region in which the at least one sandwich preform (23, 23') is inserted, and the shell segments are made of sandwich preforms (23, 23'), wherein a plurality of sandwich preforms (23, 23') are combined to form the rotor blade shell on a pressure side (11) and a suction side (12) of the rotor blade (4), wherein after the placement of the sandwich preforms (23, 23') in the main mold (20), at least one ply of fiber fabrics (25, 26) is placed on two adjacently arranged sandwich preforms (23, 23').

2. The method according to claim 1, **characterized in that** the sandwich preform (23, 23') is created by placing the fiber fabrics (25, 26) and the core material (27) on a positive mold (21), wherein the sandwich preform (23, 23') is joined in particular by fusing, gluing or sewing.

3. The method according to claim 2, **characterized in that** the sandwich preform (23, 23') is positioned on the positive mold (21) in the main mold (20).

4. The method according to one of claims 1 to 3, **characterized in that** the sandwich preform (23, 23') is produced with a cutout (24, 24') in at least one edge, in particular for receiving at least a part of a rotor blade girder (8, 8').

5. The method according to one of claims 1 to 4, **characterized in that** after the placement of sandwich preforms (23, 23') in the main mold (20), a rotor blade girder (8, 8') is embedded in or on a sandwich preform (23, 23'), or between two sandwich preforms (23, 23').

## Revendications

1. Procédé de fabrication d'une pale de rotor (4) pour une éolienne (1) dans lequel la pale de rotor (4) est au moins partiellement produite, en particulier au moins dans la zone d'une emplanture (6) de pale de rotor, dans un moule principal conçu comme un moule femelle (20), **caractérisé en ce qu'**au moins une préforme en sandwich (23, 23') est tout d'abord produite avec une structure en sandwich formée de tissus de fibres (25, 26) et d'un matériau formant noyau (27) inséré à plat entre les tissus de fibres (25, 26), et **en ce qu'**au moins une préforme en sandwich (23, 23') est ensuite insérée dans le moule principal (20), et relié à la pale de rotor (4) avec des autres préformes en sandwich (23, 23') et / ou des tissus de fibres (25, 26) et / ou au moins un longeron de pale de rotor (8, 8') insérées dans le moule principal (20) au moyen d'un procédé d'infusion, la coque de la pale de rotor (4), dans la partie dans laquelle ladite au moins une préforme en sandwich (23, 23') est insérée, est segmentée dans le sens de la profondeur du profil, et des segments de coque sont faits de préformes en sandwich (23, 23'), plusieurs préformes en sandwich (23, 23') étant assemblées à la coque de la pale de rotor au niveau d'un côté de pression (11) et d'un côté d'aspiration (12) de la pale de rotor (4) dans chaque cas, au moins une couche de tissus de fibres (25,26) étant disposée sur les deux préformes en sandwich (23, 23') juxtaposées après l'insertion des préformes en sandwich (23, 23') dans le moule principal (20).

2. Procédé selon la revendication 1, **caractérisé en ce que** la préforme en sandwich (23,23') est générée en plaçant les tissus de fibres (25, 26) et le matériau formant noyau (27) sur un moule mâle (21), la préforme en sandwich (23, 23') étant ajoutée, en particulier par liaison par fusion, collage ou couture.

3. Procédé selon la revendication 2, **caractérisé en ce que** la préforme en sandwich (23, 23') est positionnée sur le moule mâle (21) dans le moule principal (20).

4. Procédé selon l'une quelconque des revendications 1 à 3, **caractérisé en ce que** la préforme en sandwich (23, 23') est, sur au moins un bord, aménagée avec un évidement (24, 24'), en particulier pour recevoir au moins une partie d'une bande de pale de rotor (8, 8').

5. Procédé selon l'une quelconque des revendications 1 à 4, **caractérisé en ce qu'**après l'insertion de la préforme en sandwich (23, 23') dans le moule principal (20) une bande de pale de rotor (8, 8') est intégrée dans ou sur une préforme en sandwich (23, 23') ou entre deux préformes en sandwich (23, 23').
